# EUROPÄISCHE PATENTSCHRIFT

(11) **EP 2 353 124 B1**
(45) Veröffentlichungstag und Bekanntmachung des Hinweises auf die Patenterteilung: **13.07.2016**
(21) Anmeldenummer: 09801381.6
(22) Anmeldetag: 04.11.2009
(51) Int. Cl.: G06K 7/08, G06K 19/067

(54) **IDENTIFIKATIONSSYSTEM SOWIE ANWENDUNGEN**
IDENTIFICATION SYSTEM AND APPLICATIONS
SYSTÈME D'IDENTIFICATION ET APPLICATIONS

(30) Priorität: 04.11.2008 EP 08075863; 11.11.2008 US 113407 P; 16.11.2008 DE 202008015342 U; 05.12.2008 DE 202008016187 U; 12.12.2008 US 121975 P; 15.12.2008 US 122473 P; 15.05.2009 EP 09075230
(43) Veröffentlichungstag der Anmeldung: 10.08.2011
(73) Patentinhaber: T-Touch International S.à r.l., 1857 Luxembourg (LU)
(72) Erfinder: KREUTZER, André, 09648 Mittweida (DE); FÖRSTER, Matthias, 01307 Dresden (DE); THIELE, Jan, 09127 Chemnitz (DE); VOIGT, Sascha, 09337 Bernsdorf (DE)
(74) Vertreter: Lange, Sven
(86) Internationale Anmeldenummer: PCT/DE2009/001557
(87) Internationale Veröffentlichungsnummer: WO 2010/051802

(56) Entgegenhaltungen:
- EP-A2- 0 422 482
- WO-A1-2005/027032
- DE-A1-102006 048 401

## Beschreibung

Die Erfindung betrifft einen Informationsträger, wobei dieser ein elektrisch nicht leitendes Substrat, eine elektrisch nicht leitende Kleberschicht und eine elektrisch leitende Informationsschicht umfasst, und wenigstens eine zumindest den Bereich des Substrats mit der strukturierten Informationsschicht überdeckende weitere Schicht angeordnet ist. Bevorzugt betrifft die Erfindung auch ein Identifikationssystem, bestehend aus einem Informationsträger bzw. einer Gruppe derartiger Informationsträger und einem Lesegerät, welche eine eindeutige Zuordnung von Informationen zulassen, wobei die Informationsträger über ihre strukturierte Informationsschicht einer beliebigen Aktion eines Datenverarbeitungssystem zugeordnet werden oder diese auslösen können.

Der Stand der Technik zeigt mehrere Möglichkeiten auf, mittels Drucktechniken oder anderen Beschichtungsverfahren Informationsträger herzustellen, welche mittels geeignetem Leseverfahren bzw. Lesegerät ausgelesen werden können. Die wohl am meisten Verbreitesten derart hergestellten Informationsträger sind Barcodes in der Ausführung als eindimensionaler Strichcode oder beispielsweise als zweidimensionale ausgeführte Varianten. Diese werden mit geeigneten optischen Scannern erfasst und gegebenenfalls über entsprechende Datenverarbeiturigssysteme weiterverarbeitet.

Die Drucktechniken und Beschichtungstechniken zur Herstellung solcher Merkmale entwickeln sich ebenso weiter. So beschreibt die EP 1 803 562 ein Verfahren zum Transfer von bildgebenden Schichten von einer Trägerfolie bzw. Transferfolie auf Druckbogen in einer bogenverarbeitenden Maschine. Dabei wird in einem ersten Auftragswerk ein Kleber aufgebracht und in einem weiteren Beschichtungswerk mit einer Transferfolie zusammengefahren und Material von der Transferfolie durch Anhaftung auf die Druckbogen aufgebracht. Dabei wird in dem Beschichtungswerk ein Transferspalt gebildet und die Transferfolie an der Oberfläche einer Presswalze entlang mit der mit Transfermaterial beschichteten Seite auf einem Druckbogen aufgelegt und unter Druck gemeinsam mit diesem durch den Transferspalt geführt, so dass die bildgebenden Schichten in mit Kleber versehenen Bereichen von der Trägerfolie auf den Druckbogen haftend übertragen werden. Damit können ohne weiteres Barcodes und alphanumerische Informationen aufgebracht werden.

In der Schrift DE 10 2008 013 509 A1 wird ein steganografisches Verfahren beschrieben, welches mittels eben dieser Transferfolientechnik augenscheinlich nichtsichtbare Sicherheitsmerkmale in Druckprodukten erzeugen kann. Die Verifikation bzw. Sichtbarmachung dieser Merkmale erfolgt optisch mittels Decoder, welcher demnach als Lesegerät fungiert. Weiterhin ist ein resistives Sicherheitsmerkmal aus DE102006031795A1 bekannt, welches mittels Transferfolientechnik erzeugt wurde. In diesem Verfahren werden Widerstände bzw. Widerstandsnetzwerke in Druckprodukte eingebracht welche ein Sicherheitsmerkmal darstellen sollen. Die Verifikation erfolgt kontaktbehaftet mittels eines Lesegeräts, welches die Widerstände nach dem ohmschen Prinzip misst.

Ein mittels Transferfolientechnik hergestellter erfindungsgemäßer Informationsträger, dessen Verknüpfung mit einem Lesegerät zu einem Identifikationssystem und daraus resultierenden Anwendungen des Systems nach den erfindungsgemäßen Ansprüchen sind derzeit nicht bekannt.

Im Stand der Technik werden weiterhin in US 5,818,019, US 3,719,804, US 4,587,410 und US 2006/0118612 flächige gedruckte Materialien offenbart, die eine sichere Verifikation oder Validierung von Daten erlauben. Dies kann beispielsweise für Medikamente und ihre Verpackungen, aber auch für Lotterielose sinnvoll sein. Die aufgedruckten Informationen stellen z. B. die Authentifizierung sicher oder dienen der Gültigkeitsprüfung. Auch kapazitiv auslesbare Informationsträger sind u. a. aus den Anmeldungen US 3,719,804 (permanenter Informationsspeicher) und US 4,587,410 (Parksystem) bekannt. Im letztgenannten Beispiel ist die Bearbeitung und Veränderbarkeit von kapazitiven Strukturen für ein Parkmeter dargestellt. Mittels mechanischer Einheit wird die kapazitive Struktur im Lesegerät sukzessive verändert und so ihr "innerer Wert" verändert. Eine Individualisierung der Strukturen ist nicht vorgesehen. Das komplette System ist ein autarkes System ohne Interaktion zu anderen Systemen oder einer Datenverarbeitung bzw. Datenspeicherung. In US 3,719,804 sind die Herstellmöglichkeiten mittels Drucktechniken wie bspw. Siebdruck, Flexodruck und Tiefdruck aufgeführt. Die Beschreibung bezieht sich auf flüssig prozessierbare Materialien welche sich für Druckprozesse eignen. Dies ist mit allen Problemen behaftet die solche flüssig prozessierbaren Tinten mit sich bringen. Die Tinten die dem genügen sind sehr teuer, beinhalten Lösemittel, sind begrenzt haltbar und verursachen prozesstechnische Probleme. Die Individualisierung erfolgt mittels Trenntechniken der aufgebrachten Leiterzüge. Das Ausleseverfahren ist stark positionsabhängig und ist mit einer festen Ausleseposition des Informationsträgers im Lesegerät verbunden.

In der Schrift WO 2005/027032 A1, welche die Grundlage für den Oberbegriff des Anspruchs 1 bildet, wird ein System zur Überprüfung der Echtheit von bedruckten Produkten beschrieben. Diese technische Lehre stellt ein System zum Abgleich bzw. Vergleich von Informationen dar, bei dem eine Information abgespeichert (eingelesen) und dann mit Informationen auf Trägern verifiziert wird. Die Verifizierung erfolgt über ein Matching von zwei Informationsprofilen. Bei dem Matching müssen beispielsweise wellenähnliche Muster eingelesen und anschließend mit einer korrespondierenden Signatur verglichen werden. Aus diesem Grunde ist der Auslesevorgang bei dem Verfahren gemäß der WO 2005/027032 A1 sehr fehleranfällig, da die Geschwindigkeit sowohl beim erstmaligen Einlesen als auch bei jedem weiteren Lesen bzw. Verifizieren konstant sein muss, damit dasselbe Profil / dieselbe Information ausgelesen werden kann. Die Lehre der WO 2005/027032 A1 erlaubt keine determinierbare/gezielte und somit auch keine reproduzierbare Individualisierung von Informationen. Die in dieser offenbarten technischen Lehre geforderte Genauigkeit beim Auslesen von Informationen durch ein Lesegerät ist in Alltagssituationen mit hohem Durchsatz von Informationsträgern nicht realisierbar.Zusammenfassend weisen die im Stand der Technik vorgeschlagenen Lösungen mehrere Nachteile auf. Sie sind beispielsweise für die Massenanwendung nicht preiswert genug, können aufgrund ihres komplexen Aufbaus nur unvollkommen recycelt werden (RFID-Systeme), sind mitunter leicht kopierbar (Barcodes), erzeugen hohen Aufwand durch Anbringung auf das Endprodukt oder lassen sich nur schlecht oder gar nicht drucktechnisch weiterverarbeiten (Chipkarten).

Aufgabe der Erfindung war es daher, einen kostengünstigen und effizienten Informationsträger bereitzustellen, welcher eine einfache Handhabung, sowie ein äußerst ökonomisches, sicheres Auslese- und Auswertungsprinzip ermöglicht und einen Kopierschutz und maximale Manipulationssicherheit erreicht.

Überraschenderweise wird die Aufgabe durch die unabhängigen Ansprüche gelöst. Bevorzugt Ausführungsformen ergeben sich aus den Unteransprüchen.

Es war völlig überraschend, dass ein Informationsträger bereitgestellt werden konnte, der nicht die Nachteile des Stands der Technik aufweist. Der erfindungsgemäße Informationsträger umfasst ein elektrisch nicht leitendes Substrat mit einer elektrisch nicht leitenden, wenigstens bereichsweise aufgebrachten Kleberschicht, auf welcher eine mindestens einlagige elektrisch leitfähige Informationsschicht angeordnet ist. Weiterhin ist auf dem Informationsträger wenigstens eine zumindest den Bereich des Substrats mit der strukturierten Informationsschicht überdeckende weitere Schicht angeordnet, bevorzugt eine Papierschicht und/oder eine Folienschicht und/oder eine Farbschicht und/oder eine Lackschicht oder Kombinationen derer,, wobei die Informationsschicht eine durch Kaltfolientransferverfahren aufgebrachte Schicht ist.

Der Informationsträger besteht bevorzugt aus einem elektrisch nicht leitenden Substrat, auf welche eine wenigstens bereichsweise aufgebrachte, bevorzugt elektrisch nicht leitfähige Kleberschicht folgt. Auf diese Kleberschicht folgt eine mindestens einlagige elektrisch leitfähige Informationsschicht. Als Materialien für die Informationsschicht kommen bevorzugt jegliche elektrisch leitfähigen oder schwach leitfähigen Materialien in Frage. Bevorzugt kommen Metalle (beispielsweise Aluminium, Kupfer, Eisen etc.), Graphit, Ruß und/oder dielektrische Werkstoffe in Betracht. Es sind auch Kombinationen dieser Materialien oder gar Legierungen möglich. Selbst dotierte Halbleitermaterialien oder leitfähige Kunststoffe sind denkbar. Die für die Informationsschicht möglichen Materialien sind fast ausschließlich Feststoffe und daher abrasiv. Bei bekannten direkten Druckverfahren zur direkten Aufbringung von leitfähigen Schichten sind die layoutgebenden Formen und Werkzeuge stark in ihrer Haltbarkeit (Standzeit) begrenzt und verschleißen. Es war völlig überraschend, dass die Gummitücher und anderen Werkzeuge zur Aufbringung des Klebers nahezu verschleißfrei arbeiten und so Informationsschicht ohne Beeinträchtigung von Werkzeugen aufgebracht werden konnte. Es konnten nach mehreren Millionen Informationsträgern keinerlei Qualitätsverlust oder Unschärfe in der Abbildung der Informationsschicht festgestellt werden und damit ein wesentlicher Makel zum derzeitigen Stand der Technik eliminiert werden. Teure Werkzeuge, der Wechsel in der Maschine (Arbeitszeit) und die Rohstoffe zur Herstellung der Werkzeuge können somit eingespart werden und stellen damit völlig überraschend ein herausragendes ökonomisches Merkmal der Erfindung dar.

Die auf die Informationsschicht folgende mindestens eine weitere Schicht, kann mindestens eine Kleberschicht und/oder mindestens eine Papierschicht und/oder mindestens eine Farbschicht und/oder eine Lackschicht und/oder eine Folie umfassen. Es ist natürlich auch denkbar Kombinationen der Vorgenannten aufzubringen. Als Substrate kommen bevorzugt alle elektrisch nicht leitenden Materialien in Frage, wie beispielsweise Papier, Karton, Holzwerkstoffe, Verbundwerkstoffe, Laminate und/oder Kunststoffe umfasst. Es war überraschend, dass durch die bevorzugte Ausführungsform ein Informationsträger zur Verfügung gestellt werden kann, der eine große Speicherkapazität und außerdem eine hohe Stabilität und Stoßunempfindlichkeit aufweist. So kann der Träger beispielsweise einfach transportiert und versendet werden.

In einer bevorzugten Ausführungsform wird der Informationsgehalt des erfindungsgemäßen Informationsträgers durch die Informationsschicht bestimmt.Der erfindungsgemäße Informationsträger ermöglicht verschiedene Anwendungen und hat demgemäß zahlreiche Einsatzbereiche. Hierzu gehören beispielsweise die Anwendungen im Werbe- und Marketingbereich oder im Ticketing. Ein Druckprodukt beinhaltet damit eine Informationsschicht, welche in Kombination mit einem Lesegerät weiterführende Informationen (z.B. aus dem Internet) zugänglich macht oder selbst Aktionen auslösen kann. Es war völlig überraschend, dass das erfindungsgemäße System eine erweiterte Produktpalette für Anbieter ermöglicht und diese zudem sehr schnell gewechselt oder angepasst werden kann. Dies stellt eine Vermehrung der technischen Möglichkeiten dar. Zum Beispiel kann in einem Schaltergespräch in einer Bank oder Post der betreffende Mitarbeiter ohne Zeitverzug durch aufwendige Beratungsleistungen dem Kunde den Informationsträger mitgeben, welcher diesen dann zu Hause in aller Ruhe nutzt und sich über Angebote und Inhalt des Informationsspeichers informiert. Die abrufbaren Inhalte oder auslösbaren Aktionen können jederzeit geändert oder angepasst werden. Würde man die Informationen auf reine Druckprodukte bringen müssten diese mit jeder Änderung neu gedruckt und verteilt werden. Mit der erfindungsgemäßen Lösung ist dies nicht notwendig und spart damit sehr viel Aufwand, Zeit, Kosten und sind zudem immer aktuell. Schaltermitarbeiter sind oftmals angehalten ihren bedienten Kunden Werbe- und Informationsbroschüren (als reine Druckprodukte) am Ende des normalen Schaltervorgangs mitzugeben. Oftmals in Form von Broschüren oder sogenannten Flyern werden dem Kunde darin weiterführende Angebote von Versicherungen, Banken, Angebote für Reisen, Konsumgüter jeglicher Art oder besonderen Aktionen unterbreitet. Diese Form der Werbung mit konventionellen Druckprodukten ist absolut limitiert hinsichtlich ihres Informationsgehalts. Die erfindungsgemäßen Informationsträger indes ermöglichen zudem die Nutzung der vollen Bandbreite an werbewirksamen Effekten wie Bild, Ton, Kombinationen davon mit Hilfe geeigneter Datenverarbeitungssysteme an die die Lesegeräte angeschlossen sein können. Solche Datenverarbeitungssysteme können bevorzugt Computer, Handys, Konsolen oder andere Systeme sein. Im einfachsten Fall ist nur ein Lesegerät und ein Informationsspeicher notwendig. In einer besonders bevorzugten Ausführungsform wird ein Lesegerät an das datenverarbeitende Medium angeschlossen. Der Informationsträger wird dann über das Lesegerät seine gespeicherten Informationen zugängig machen und beispielsweise virtuelle Inhalte öffnen. Der Informationsgehalt ist nahezu unendlich, da beispielsweise mit einer mit dem Informationsträger geöffneten Internetseite sich die komplette virtuelle Welt erschließen lässt und den Nutzer weiter eintauchen lässt und evtl. auch andere als die einleitenden Angebote des Informationsträgers offeriert werden können.

Es können bevorzugt Überdeckungen der Informationsschicht durch Aufbringung weiterer Schichten bereitgestellt werden, welche mehrere Vorteile erzielen, wie beispielsweise optische Unkenntlichmachung der Informationsschicht und eine daraus resultierende erhöhte Manipulationssicherheit des Informationsträgers. Zudem konnte die Informationsschicht überraschenderweise derart dünn aufgebracht werden, dass eine einfache und kostengünstige Weiterverarbeitung bzw. -veredlung stattfinden kann. So können weitere Schichten aufgebracht werden, ohne dass es zu Wechselwirkungen mit der Informationsschicht kommt und die Informationsschicht selbst völlig unbeschadet bleibt.

Überraschenderweise hat sich gezeigt, dass die Kosten für die komplexen Informationsspeicher beziehungsweise Informationsträger unwesentlich teurer als die eines reinen Druckproduktes sind und damit um ein Vielfaches günstiger als CDs oder andere Formen von Informationsspeichern. Hierbei ist jedoch zu bedenken, dass der Informationsspeicher jederzeit ergänzt beziehungsweise verändert werden kann. Durch den Informationsträger werden Rohstoffe eingespart und die Effektivität der Informationsübermittlung wird verbessert. Zudem können die Informationswelten medienübergreifend dargestellt werden. Während bei einer Zeitschrift ein Redaktionsschluss existiert nach dem nichts mehr verändert werden kann und die Zeitschrift in den Druck geht, ermöglicht die Informationswelt des Internets eine stetige Anpassung der Inhalte und eine Weiterbearbeitung von Themen wie dies in einem reinen Druckprodukt nicht möglich wäre.

Am konkreten Beispiel einer Ausgabe eines Magazins für Geschichte soll die Verwendung des erfindungsgemäßen Identifikationssystems beschrieben werden. In der ersten Ausgabe dieses Magazins wird ein Thema platziert, z. B. das Thema "Ägypten". Dieser Ausgabe liegt ein Lesegerät und die ersten Informationsträger bei. Der Käufer dieses Magazins liest sich das Magazin in seiner gewohnten Weise durch und findet im Heft Verweise auf fortführende Inhalte welche er mittels Lesegerät, datenverarbeitendem Medium und dazugehörigem Informationsträger abrufen kann. So kann er beispielsweise virtuell eine Pyramide von innen betrachten oder 3D-Ansichten von Gebäuden sehen, welches in einem reinem Printmedienprodukt gar nicht oder nur teilweise möglich wäre. Zudem kann der Verlag weitere Informationsträger oder Inhalte anbieten welche entweder unmittelbar oder auch gar nicht mit dem Thema "Ägypten" zu tun haben. Als Beispiele für unmittelbare Verknüpfung sind weiterführende Links zu.dem Thema, themenbezogene Gewinnspiele (Ausblick auf den Gewinn einer Ägyptenreise etc.), Bücher, CDs, DVDs Kinofilme etc.

Will man medienübergreifende Verkaufsförderung erreichen, spricht man von Cross-Promotion. Sie stellt eine Sonderform der Promotion dar, bei der mindestens zwei Werbetreibende Kommunikationsmaßnahmen durchführen und eine einheitliche Botschaft an eine für beide bzw. alle interessante Zielgruppe transportieren. So können Werbekosten deutlich reduziert werden und gleichzeitig ein größeres Werbevolumen realisiert werden. Zudem kann man sich im Vorfeld der gemeinsamen Maßnahme besser absprechen um Interessenkonflikte und Konkurrenzwirken auszuschließen. Im Zusammenhang mit dem erfindungsgemäßen System könnten so beispielsweise ein Tourismusanbieter für Ägypten, ein Museum in dem gerade eine ägyptische Ausstellung zu sehen ist, ein Kinofilmproduzent, welcher einen Film in oder über Ägypten gedreht hat und ein ägyptisches Spezialitätenrestaurant ihre Werbe- und Informationsbotschaften platzieren und würden zusammen mit dem Verlag, welcher diese Themenhefte veröffentlicht von der Cross-Promotion profitieren. In diesem Fall lassen die Werbeanbieter dem Themenheft eigene Informationsträger beilegen, die beim Einlesen mittels des Lesegeräts die Inhalte des Werbenden aufrufen und verfügbar machen. Stellen sich unerwartete Ereignisse oder Änderungen ein z.B. vorübergehende Schließung des Museums wegen Baumaßnahmen, so lassen sich diese Sachen virtuell in Sekundenschnelle anpassen und aktualisieren und der Kunde hat somit immer einen aktuellen und weiterführenden Stand als in herkömmlichen Printmedienprodukten bei der die abgedruckte Information nicht oder nur schlecht berichtigt, verändert oder angepasst werden kann. Es war überraschend, dass die Informationsträger zudem vollflächig (ein- und beidseitig) als Druckprodukte nutzbar sind und stellen keine optische Einschränkung dar, wie dies durch aufgedruckte Barcodes etc. geschehen würde. Das heißt, die Informationsträger können ebenfalls als Druckprodukt genutzt werden. Damit können auch hochwertige Sammelkarten oder Themenwelten realisiert werden und ähnlich Briefmarken getauscht, gesammelt, verwendet oder verkauft werden. Überraschenderweise hat sich durch Versuche herausgestellt, dass die Informationsträger wie reine Druckprodukte entsorgt oder recycelt werden können, wenn sie nicht mehr relevant für den Nutzer sind. Hierdurch können Rohstoffe eingespart und Herstellungskosten reduziert werden, was sich wiederum in einem günstigen Kaufpreis wiederspiegelt.

Besonders vorteilhaft ist die Verwendung in direktem Zusammenhang mit sogenannten Virtual Items, also Dingen, welche realen wirtschaftlichen und damit handelbaren Wert besitzen, aber nur in einer virtuellen Darstellung oder Umgebung existieren. Beispiele sind sogenannte Online-Weiten wie "Second Life®" oder andere Massen-Mehrspieler-Online-(Rollen-)spiele. In einer weiteren vorteilhaften Anwendung können die Informationsträger für Downloadbereiche für Musik, Videos, Texte, Daten oder E-Books oder aber für Bonusmarken oder entsprechende Programme verwendet werden. Ferner ist es nicht unbedingt nötig die vorgenannten Inhalte auch wirklich herunterzuladen. Die erfindungsgemäßen Informationsträger können ebenfalls als Zugangsschlüssel zu diesen Inhalten fungieren ohne diese notwendigerweise über Datenleitungen zu transferieren.

Besonders vorteilhaft ist es, wenn die Informationsträger Teil eines Druckproduktes, beispielsweise eines Medienerzeugnisses bspw. einer Zeitung, eines Journals, eines Buches oder dergleichen sind. Besonders bevorzugt sind auch Verpackungen.

Vorteilhafterweise ist ein Einsatz in allen Bereichen möglich und vorteilhaft, in welchen eine eineindeutige Zuordnung von Informationen erforderlich oder aber vorteilhaft ist. In einer besonders bevorzugten Ausführungsform ist der Informationsträger Teil eines Druckproduktes und bereits mittels Perforation oder anderer Sollbruchstellentechnik von und aus diesem Druckprodukt herauslösbar.

Die Informationsträger können ebenfalls bevorzugt in Gruppen genutzt werden, wobei wiederum mehrere Gruppen oder mehrere Informationsträger ein Identifikationssystem bilden. Das Identifikationssystem kann bevorzugt noch ein Lesegerät umfassen, das das einfache und schnelle Lesen des auf den Informationsträgern gespeicherten Information erlaubt.

Durch die Verwendung von beispielsweise hochproduktiven Bogenoffset- oder Rollenoffsetverfahren können die erfindungsgemäßen Informationsträger sehr preiswert hergestellt, veredelt und konfektioniert werden. Dadurch entstehen sehr vielfältige Einsatzbereiche, für die bisherige Informationsträger und/oder Lesegeräte zu teuer, wenig vielseitig oder einfach nur durch ihre Form ungeeignet waren. Die erfindungsgemäßen Informationsträger stellen nach dem derzeitigen Stand der Technik eine der preiswertesten Möglichkeiten der nichtoptischen Informationsspeicherung überhaupt dar.

Das erfindungsgemäße Identifikationssystem umfasst mindestens ein Lesegerät und mindestens einen Informationsträger, wobei der Informationsträger eine Kleberschicht und eine Informationsschicht umfasst, und die Informationsschicht eine durch Transferverfahren, bevorzugt Transferfolienverfahren aufgebrachte Schicht ist.

In einer weiteren bevorzugten Ausführungsform wird das Lesegerät mit mindestens einem datenverarbeitenden Medium zusammengeschaltet. Beispiele für solche datenverarbeitenden Medien sind Computer, PDAs, Konsolen und Handys ohne auf diese begrenzt zu sein. Damit ist die Verbindung der erfindungsgemäßen Identifikationssysteme mit weiteren Geräten und Systemen gewährleistet, die den informationsgehalt der Informationsträger nutzen können. Das Lesegerät kann einfach und schnell mit den aufgeführten Geräten und Systemen verbunden werden, wodurch eine hohe Flexibilität erreicht werden kann. Der Informationsträger, eine Gruppe von Informationsträgern und/oder ein Identifkationssystem kann bevorzugt in Verbindung mit einer Leseeinrichtung über seine strukturierte Informationsschicht einer Aktion eines Datenverarbeitungssystem zugeordnet werden oder diese auslösen, bevorzugt betrifft dies Aktionen auf nicht-vernetzten Datenverarbeitungssystemen und besonders bevorzugt auf vernetzten Datenverarbeitungssystemen. Im Sinne der Erfindung bezeichnet eine Leseeinrichtung bevorzugt ein Lesegerät. Das besonders bevorzugte Beispiel für solch ein vernetztes Datenverarbeitungssystem ist das Internet bzw. die daran angeschlossenen Datenverarbeitungssysteme.

In einer weiteren bevorzugten Ausführungsform des Informationsträgers, ist wenigstens eine zumindest den Bereich des Substrats mit der strukturierten Informationsschicht überdeckende weitere Schicht angeordnet. Dabei kann es sich beispielsweise um eine Papierschicht und/oder eine Folienschicht und/oder eine Farbschicht und/oder eine Lackschicht oder Kombinationen derer handeln. So kann überraschenderweise durch eine weitere Schicht einfach gewährleistet werden, dass der Informationsgehalt überdeckt und unkenntlich gemacht wird, aber auch, dass er vor Umgebungseinflüssen wie Luftfeuchte, Temperatur, Sonneneinstrahlung oder mechanischem Stress geschützt wird. Hierdurch wird sichergestellt, dass der Informationsträger eine hohe Haltbarkeit besitzt und nicht beschädigt oder gar vernichtet wird.

Es ist bevorzugt, dass das Lesegerät sowohl die wenigstens bereichsweise aufgebrachte Informationsschicht erkennen, als auch messen kann und dadurch der Informationsgehalt des Informationsträgers bestimmt wird. Dies ist im Vergleich zum Stand der Technik eine weitere Neuheit, weil nun nicht nur das Vorhandensein von Informationen (beispielsweise in Bit-form) geprüft werden kann, sondern überraschenderweise auch deren Qualität. Dies trägt sehr zur Manipulationssicherheit der Informationsträger bei und stellt zudem eine Erhöhung der Speichertiefe relativ zur Verfügung stehenden Fläche für den Informationsträger dar. Beispiele hierfür zeigen die Figuren. Zunächst geht man davon aus, dass der Informationsgehalt der Informationsträger identisch ist. Bei genauerer Betrachtung (Vergößerungsfenster) kann man jedoch erkennen, dass die Informationsschicht (beispielhaft in den Figuren dargestellt) selektiv verändert ist. Dies hat zur Folge, dass eine rein quantitative Prüfung durch das Lesegerät einen identischen, aber die qualitative Prüfung einen unterschiedlichen Informationsgehalt widerspiegelt. Zur qualitativen Prüfung der Informationsschicht können beispielsweise kapazitive und/oder induktive Verfahren genutzt werden.

Nach bisherigen Stand der Technik ist ein Informationsträger im Identifikationssystem an genau einen Kontext gebunden und es ist damit nicht möglich einen Informationsträger für einen anderen Zweck zu verwenden als der, für den das Identifikationssystem ursprünglich entwickelt wurde. Durch das Einbringen einer interpretationsbeschreibenden Information in die Informationsschicht eines Informationsträgers, einer Gruppe von Informationsträgern und/oder eines Identifikationssystems, als Beschreibung wie eine Information in einem gegebenen Kontext zu interpretieren ist, kann überraschenderweise der Kontext des Identifikationssystems vom Informationsträger selbst bestimmt werden. Bevorzugt wird dies durch die Unterteilung der Informationsschicht in einen interpretationsbeschreibenden Bereich, als Bereich der Informationsschicht welcher Informationen zur Interpretation beinhaltet, und in einen informationstragenden Bereich, als Bereich der Informationsschicht welcher Nutzinformationen beinhaltet. Wobei Nutzinformationen, als Informationen zu verstehen sind welche einen Nutzen erzeugen in dem sie bspw. das Lesegerät veranlassen eine bestimmte Aktion aufzurufen. Als Beispiel dafür dient ein Lesegerät welches, falls ein Informationsträger aus einem Marketingkontext erkannt wird, Werbeinhalte in einem geeignetem Medium, wie beispielsweise einem Computer oder Fernseher, zugänglich macht und falls ein Informationsträger aus dem Kontext einer Visitenkarte erkannt wird, die auf dem Informationsträger gespeicherten Informationen dem Anwender, beispielsweise durch sein Mobiltelefon, zugänglich macht.

Vorteilhafterweise besteht die Form, das Layout bzw. die Struktur der Informationsschicht kann aus Eckpunkten und/oder Kurven definierten Füllflächen, insbesondere aus Rechtecken und/oder Kreisen. Es sind sowohl die Position, als auch die Form und/oder die Fläche selbst als Bestandteile der strukturierten Informationsschicht mittels der Leseeinrichtung feststellbar. Dabei stellt diese Informationsschicht den Informationsinhalt einer bestimmten Anzahl von Informationsträgern dar. Es kann sich dabei um einzigartige Exemplare handeln oder n-fache Anzahl davon, abhängig ob weitere Informationsträger existieren die eine absolut identische strukturierte Informationsschicht besitzen.

Sowohl die Informationsschicht (und damit der verbundene Informationsgehalt), als auch das optische Erscheinungsbild können für die Informationsträger unterschiedlich gestaltet werden. So können innerhalb einer Gruppe von erfindungsgemäßen Informationsträgern:
- Mehrere Informationsträger die gleiche Struktur der Informationsschicht und mindestens eine gleich gestaltete Farbschicht besitzen, so dass eine in sich geschlossene Gruppe von informationstechnisch und optisch gleichen Informationsträgern realisiert wird,
- mehrere Informationsträger eine gleiche Struktur der Informationsschicht und mindestens eine unterschiedlich gestaltete Farbschicht besitzen, so dass eine Gruppe von informationstechnisch gleichen, aber optisch unterschiedlichen, Informationsträgern realisiert wird,
- mehrere Informationsträger eine ungleiche Struktur der Informationsschicht und mindestens eine gleich gestaltete Farbschicht besitzen, so dass eine Gruppe informationstechnisch eindeutiger, aber optisch gleicher, Informationsträgern realisiert wird,
- mehrere Informationsträger eine ungleiche Struktur der Informationsschicht und mindestens eine ungleich gestaltete Farbschicht besitzen, so dass vollständig, also optisch und informationstechnisch, eindeutige Informationsträgern realisiert werden.

Somit könne vorteilhafterweise unzählige Kombinationen generiert werden, die eine einfache Gruppierung und Verwaltung der Informationsträger ermöglichen.

Die aufgebrachten Informationsschichten der Informationsträger können bereichsweise, mittels additiver und/oder subtraktiver Verfahren, bevorzugt durch Inkjetverfahren und besonders bevorzugt durch Laserverfahren in ihrer Strukturierung verändert werden. Es hat sich überraschenderweise gezeigt, dass dies besonders vorteilhaft zur Erzeugung informationstechnisch verschiedener Inhalte bzw. zur Individualisierung der Informationsträger ist. So können beispielsweise Rohlinge von Informationsträgern hergestellt werden, die eine Automatisierung und Massenproduktion erlauben. Im weiteren Verlauf ihrer Informationsgestaltung können so selektiv Bereiche erzeugt oder zerstört werden, die entweder überhaupt erst ein sinnhaften Informationsgehalt darstellen oder den anfänglichen Informationsgehalt des Informationsträgerrohlings komplettieren. Mittels reiner Transferfolientechnik könnten immer nur begrenzt unterschiedliche Informationsträger (je nach Druckformat) hergestellt werden, man spricht von Regionalisierung. Die Möglichkeit der bereichsweisen Anpassungen der Informationsträger kann speziell im Zusammenhang mit dem sehr selektiven Auslesen und Messen selbiger äußerst vorteilhaft sein. So kann beispielsweise durch zusätzlichen Auftrag, partiellem Abtrag und/oder Materialveränderung ein informationstechnisch unterschiedlicher (im Vergleich zum Ausgangszustand) Informationsträger entstehen. Eine solche Veränderung, die nicht unbedingt sofort offensichtlich im Sinne von optisch detektierbaren Merkmalen ist, ist beispielhaft in den Figuren dargestellt. Es kann überraschenderweise über das partielle Entfernen von Material hinaus auch eine chemische und/oder physikalische Umwandlung von Material zur Änderung von Messwerten und damit Änderung des Informationsgehalts derartiger Informationsträger dienen. Beispielhaft sei hier die thermisch induzierte Oxidation des leitfähigen Materials Aluminium zu Aluminiumoxid genannt ohne auf dieses begrenzt zu sein. Mit Kohlenstoffhaltigen Verbindungen oder gar leitfähigen Materialien wie beispielsweise PEDOT:PSS (Poly(3,4-ethylenedioxythiophene) poly(styrenesulfonate)) konnten überraschenderweise gleichfalls sehr gute Ergebnisse erzielt werden. Damit gelang es erstmals derartige Informationsträger nicht nur flächig auszuwerten sondern auch räumlich (vertikal), dadurch dass hier teilweise Material aufgebracht wird bzw. partiell abgetragen wird. Dies führt zur Möglichkeit eine höhere Datendichte bei vergleichbarer Fläche auf solche Datenträger unterzubringen.

Es ist auch bevorzugt, auf dem Informationsträger weitere optische, elektrische, elektronische, sensorische und/oder akustische Elemente aufzubringen. Um weitere Funktionen innerhalb des erfindungsgemäßen Informationsträger realisieren zu können, können mittels geeigneter additiver Verfahren Leiterzüge und elektronische Elemente wie bspw. Batterien, Displays, Sensoren etc. aufgebracht werden. Je nach Element und verwendeten Verfahren kann ein Aufbringung vor oder nach Erzeugung der strukturierten Informationsschicht bevorzugt sein. Dabei können die Elemente und deren Beschaltung sowohl separat als auch galvanisch gekoppelt mit den Strukturen der Informationsschicht vorliegen. Es kann außerdem bevorzugt sein, dass das Substrat im Ausgangszustand der Verarbeitung bereits Elemente oder Teile davon enthält. Beispiele hierfür umfassen piezoelektrische Substrate (PVDF-Folien) oder Substrate mit piezoelektrischen Inhaltsstoffen oder Bereichen.

In einer besonders bevorzugten Variante sind auf dem Informationsträger sekundäre Informationen aufgebracht oder enthalten, welche insbesondere die Orientierung oder Geschwindigkeit des Informationsträgers relativ zur Leseeinrichtung bestimmbar machen. Dies ist besonders vorteilhaft um den Informationsgehalt fehlerfrei auszulesen oder um überhaupt den Auslesevorgang zu starten. In Verbindung mit dynamischen Informationsträgern die während oder durch eine Bewegung ausgelesen werden, kann durch sekundäre Informationen die Lesegeschwindigkeit bestimmt werden und somit definiert den Lesevorgang starten und auch beenden. Unter sekundären Informationen können beispielsweise auch Sicherheitsmerkmale verstanden werden, welche auch induktiv, resistiv und/oder kapazitiv ausgelesen werden können ohne auf diese physikalischen Mechanismen begrenzt zu sein. In den Figuren ist beispielhaft ein solches Sicherheitsmerkmal dargestellt.

In einer weiteren bevorzugten Ausführungsform des Informationsträgers können Merkmale und/oder Elemente auf oder angebracht werden, welche zusätzliche optische Informationen beinhalten, insbesondere aufgedruckte Werte, Symbole, Zeichen, Sicherheits- und/oder Echtheitsmerkmale, insbesondere auf Spielkarten und/oder Sammelkarten. Durch diese zusätzlichen Informationen kann überraschenderweise garantiert werden, dass Prüfkriterien hinzukommen, welche die zweifelsfreie Echtheit des Informationsträgers auch ohne Lesegerät gewährleistet. Dies können Beispielsweise Spiegelfolienelemente, Hologramme, Mikroschriften, Wasserzeichen und andere nach dem Stand der Technik bekannte Sicherheitsmerkmale sein. Es kann so durch einfache Mittel sichergestellt werden, dass durch eine einfache und vor allem schnelle optische Prüfung die Echtheit der Träger gezeigt wird. Es sind hierfür bevorzugt keine teuren zusätzlichen Geräte notwendig.

Eine beispielsweise kapazitive Leseeinrichtung dient zur Decodierung bzw. zum Auslesen der aufgebrachten Informationsschicht. Hierbei ist bevorzugt, dass die strukturierte Informationsschicht eines Informationsträgers, einer Gruppe von Informationsträgern und/oder einem Identifikationssystem durch eine Leseeinrichtung, deren Elektrodenanordnungen so ausgebildet und angeordnet ist, dass die Anzahl und/oder Größe und/oder Form und/oder Lage der strukturierten Informationsschicht des oder der Informationsträgers erkannt, erfasst und datentechnisch weiterverarbeitet wird. Dabei sind die aktiven Flächen (=Leseelektroden und/oder Kondensatorflächen) so ausgebildet, dass die Informationen des Informationsträgers zweifelsfrei ausgelesen werden können. Bevorzugt bildet der Informationsträgers im Auslesevorgang einen Bestandteil der Leseeinrichtung bzw. einen Bestandteil mit den Anordnungen der Leseelektroden in dieser. So werden durch den Informationsträger überdeckte Stellen des Lesegeräts als 1 und nicht vorhandene Stellen als 0 erkannt (Bitprinzip). Dabei ist natürlich auch eine Spiegelung möglich, sprich eine 1 bedeutet keine Überdeckung und 0 bedeutet Überdeckung. Das Lesegerät als Bestandteil des Identifikationssystems kann darüber hinaus mit speziell angepassten Lesegerätoberflächen (beispielhaft in den Figuren dargestellt) mit integrativen, aufsummierenden und differentiellen Möglichkeiten, welche nicht (nur) dem Bitprinzip folgen, den Informationsgehalt bestimmen. Demzufolge betrifft die Erfindung auch die Verwendung eines derartigen Informationsträgers bei dem die strukturierte Informationsschicht durch eine Leseeinrichtung, deren Elektrodenanordnungen so ausgebildet und angeordnet sind, dass die Anzahl und/oder Größe und/oder Form und/oder Lage der strukturierten Informationsschicht des Datenträgers erkannt, erfasst und datentechnisch weiterverarbeitet wird. Dies ist über das bekannte Bitprinzip eine erfindungsgemäße Neuheit des Identifikationssystems und stellt eine Eröffnung eines neuen technischen Gebietes dar.

In einer besonders bevorzugten Ausführungsform wird die Verwendung eines Informationsträgers, einer Gruppe von Informationsträgern und/oder einem Identifikationssystem beschrieben, bei dem dieser einem Datensatz in einem Datenverarbeitungsgerät zugeordnet ist und dieser konstant bleibt oder sich im Laufe seiner Verwendung verändert. Überraschenderweise kann die bevorzugte Ausführungsform speziell für Guthabenkonten oder generell für sich dynamisch ändernde Inhalte bzw. Aktionen genutzt werden, wobei die Informationen auf dem Informationsträger bevorzugt dynamisch gespeichert werden. Die Informationsträger können so vielfach eingesetzt werden. Demgegenüber stehen statische Datensätze die immer fortwährend gleich bleiben.

Als Beispiel für eine derartige Verwendung sind Tickets zur Nutzung öffentlicher Transportmittel wie Züge, Straßenbahnen, Bussen usw.. Ein Informationsträger kann als 10er Karte fungieren welche bei jeder Verwendung heruntergezählt wird. Im Gegensatz zu Stempelsystemen die oft in Straßenbahnen oder Bussen anzutreffen sind, findet keine Veränderung des Informationsträgers statt (weder optisch noch funktionell) sondern die Veränderung eines hinterlegten, diesem Informationsträger zugeordnetem Datensatzes. Die Verwendung bzw. der Datensatz kann dabei auch Zustände annehmen, die er bereits hatte, also reversibel sein. Dies wäre im Falle einer erneuten Aufladung des Tickets gegeben.

Als weiteres Beispiel soll die Verwendung eines Informationsträgers als Guthabenkarte für Pre-Paid Handys erwähnt sein. Demnach würde ein Kunde in einem Geschäft eine derartige Karte erwerben und mittels Leseeinrichtung das Guthaben teilweise oder vollständig freischalten. Diese Guthabenkarte wäre im letzten Fall leer und würde bei erneuter Verwendung kein weiteres Guthaben freischalten, der Datensatz hätte sich dementsprechend geändert. Dieser könnte aber auch wieder in seine Ausgangssituation gebracht werden durch eine erneute Aufladung der Karte. Man spricht hier von einem dynamischen (veränderlichen) Datensatz, der sich im Laufe der Verwendung der Karte ändert.

In besonders bevorzugten Verwendungen können die Informationsträger, Gruppen von Informationsträgern und/oder Identifikationssysteme bevorzugt als Spielkarten, Sammelkarten, Briefmarken, Frankierung, Porto, Warenlogistik, Warenverfolgung, Einlass, Eintrittskarten, Zugang zu geschlossen Bereichen, virtuellen Inhalten, Marketinganwendungen, Kundenbindung, Lotterie- und Gewinnspielen, Mitgliederausweise, Zeitkarten, Bezahlanwendungen, Echtheits-Zertifikate, Zertifikate, Fälschungssicherungen, Kopierschutze, Signaturen, Lieferscheine, Gegenstände innerhalb eines Computerspiels, Music/Video/E-Books-Downloads, Bonusmarken/- programme oder Geschenkkarten verwendet werden. Weitere Verwendungsmöglichkeiten sind nicht ausgeschlossen. Der Informationsträger kann überraschenderweise in unterschiedlichen Bereichen zuverlässig und variabel eingesetzt werden, wobei für den Einsatz keine wesentlichen Modifikationen vorgenommen werden müssen. Hierdurch kann der Informationsträger bevorzugt als Massenprodukt günstig hergestellt werden.

Vorteile in den Verwendungen sind beispielsweise ein hoher Automatisierungsgrad, äußerst schwer kopierbar, hohes Maß an Sicherheit, sehr preiswertes, zuverlässiges Identifikationssystem und recyclebare Informationsträger, welche beliebig weiterveredelt werden können. Zudem können weitere Vorteile entstehen, die sich aus der jeweiligen Verwendung ergeben. So können beispielweise weitere Kundeninformationen gesammelt werden und gegebenenfalls optimierte Marketingangebote offeriert werden. Viele Produkte, speziell Druckprodukte, sind selten oder gar nicht über ihre optische Funktion hinaus von Bedeutung. In sehr einfachen Fällen werden Gutscheincodes oder andere Informationen abgebildet um den Nutzer weiterführende Angebote, Informationen etc. via Internet zukommen zu lassen. Diese Codes sind leicht kopierbar, müssen eingetippt werden und stellen keine unmittelbaren Zugang zu den gewünschten Informationen dar. Diese mangelnden Eigenschaften können durch das erfindungsgemäße Identifikationssystem überwunden werden.

Die Informationsträger, Gruppen von Informationsträgern und/oder Identifikationssysteme können in ihrer Verwendung auch bevorzugt dadurch charakterisiert sein, dass nur in Kombination mit mindestens einem weiteren Informationsträger der Informationsgehalt komplettiert und damit die Zuordnung zu einem weiteren Datensatz freigegeben wird. Dies ist besonders vorteilhaft bei Datenschlüsseln oder wenn ein erhöhter Informationsgehalt notwendig werden sollte. Beispielsweise könnten zwei Nutzer an zwei unterschiedlichen Orten jeweils einen Informationsträger im Rahmen des erfindungsgemäßen Identifikationssystems benutzen um gemeinsam einen Chatroom zu öffnen, eine Transaktion auszulösen (bei gemeinsamen Konten), ein gemeinsames Spiel aufzurufen und sich zu identifizieren usw. Dabei können durchaus auch deutlich mehr als nur 2 dieser Informationsträger derart zusammen kombiniert werden. Durch die flexible und einfache Anpassung der Informationsträger sind die technischen Möglichkeiten zur Benutzung der Informationsträger im Wesentlichen unbegrenzt.

Es ist weiterhin bevorzugt, dass das Lesegerät des Identifikationssystems für die Informationsträger entweder einen Schacht, einen Schlitz und/oder eine Auflagefläche zur Aufnahme wenigstens eines Teils des Informationsträgers besitzen und der Informationsträger vorgegeben oder beliebig in, an oder auf das Lesegerät positioniert ist.

Die Erfindung soll im Folgenden anhand von Figuren beispielhaft erläutert werden, ohne jedoch auf diese begrenzt zu sein; es zeigen:
- Fig. 1: 1. Beispiel eines Informationsträgers
- Fig. 2: 2. Beispiel eines Informationsträgers
- Fig. 3: 3. Beispiel eines Informationsträgers
- Fig. 4: 4. Beispiel eines Informationsträgers
- Fig. 5: 1. Beispiel eines Lesegerätes
- Fig. 6: Beispiel eines Informationsträgers mit einem Sicherheitsmerkmal
- Fig. 7: 2. Beispiel eines Lesegerätes
- Fig. 8: 5. Beispiel eines Informationsträgers
- Fig. 9: 6. Beispiel eines Informationsträgers
- Fig. 10: 3. Beispiel eines Lesegerätes

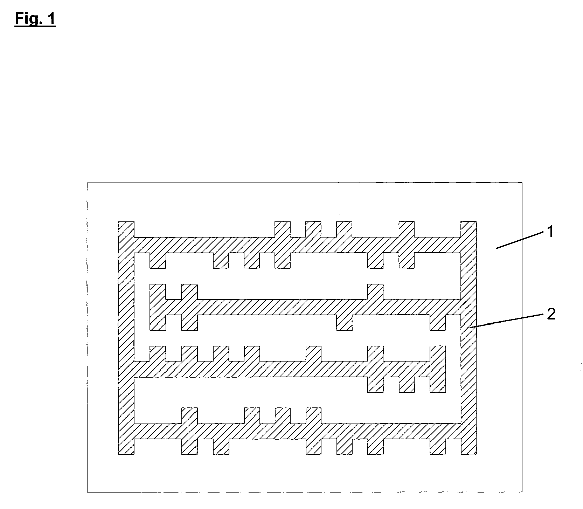

Fig. 1 zeigt ein Beispiel eines Informationsträgers. Ein Informationsträger ist dargestellt bestehend aus einem Substrat 1 und einer Informationsschicht 2.

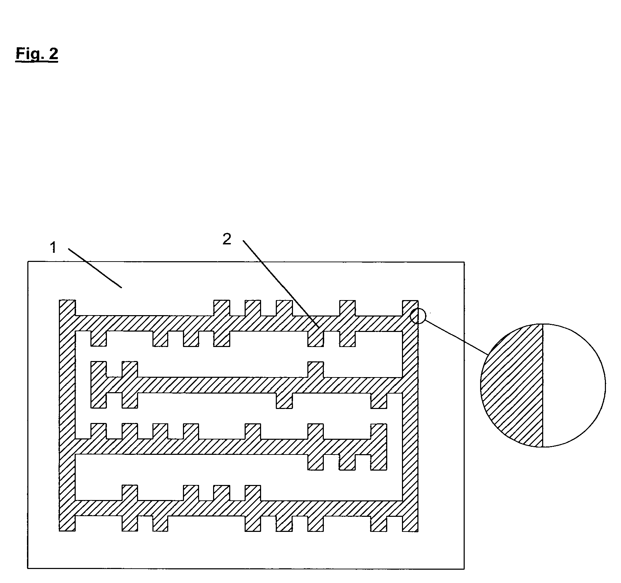

Fig. 2 stellt ein zweites Beispiel eines Informationsträgers. Es ist eine Skizze eines Informationsträgers bestehend aus einem Substrat 1 und einer Informationsschicht 2 aufgezeigt.

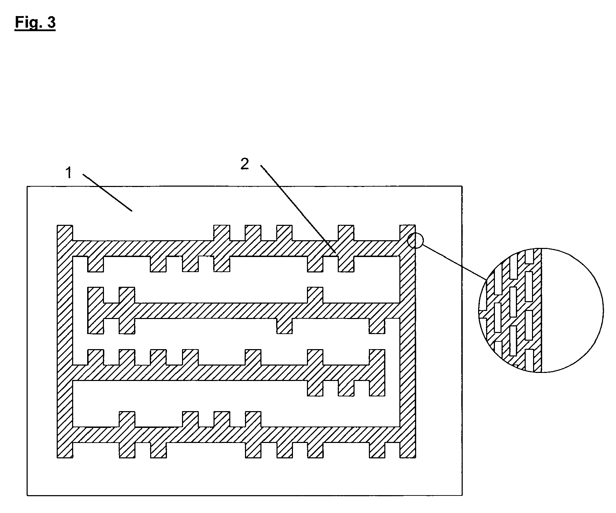

Fig. 3 zeigt ein drittes Beispiel eines Informationsträgers. Der Informationsträger umfasst bevorzugt ein Substrat 1 und eine Informationsschicht 2. Hierbei ist die Informationsschicht 2 beispielsweise mit einer Musterung von parallel orientierten rechteckigen Flächen durchzogen.

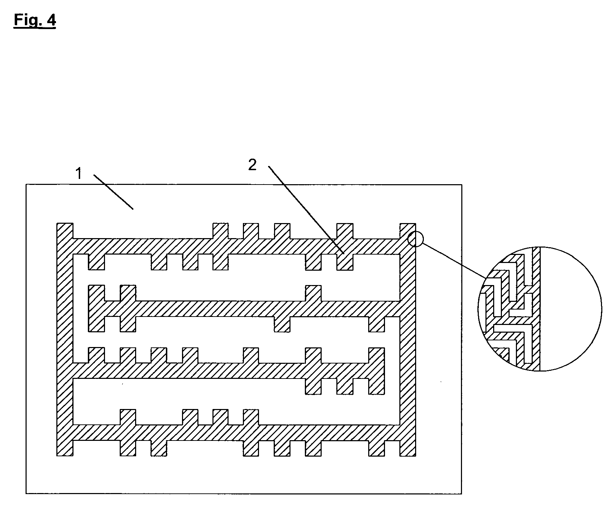

Fig. 4 stellt ein viertes Beispiel eines Informationsträgers dar. Der Informationsträger besteht aus einem Substrat 1 und einer Informationsschicht 2. Die Informationsschicht 2 kann beispielsweise mit einer Musterung von L-förmigen Flächen durchzogen sein.

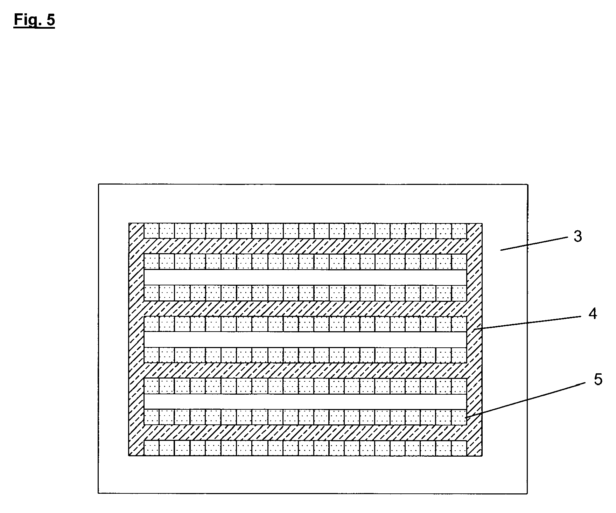

Fig. 5 zeigt ein erstes Beispiel eines Lesegerätes. Ein Lesegerätlayout umfasst bevorzugt ein Trägermaterial bzw. Platine 3, eine Erregerelektrode 4 und eine Leseelektrode 5.

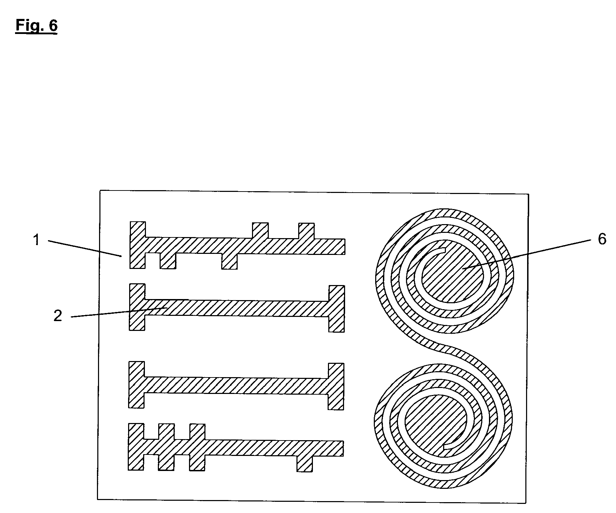

Fig. 6 stellt ein Beispiel eines Informationsträgers mit einem Sicherheitsmerkmal dar. Der Informationsträger besteht bevorzugt aus einem Substrat 1, einer Informationsschicht 2 und weist bevorzugt ein Sicherheitsmerkmal 6 auf.

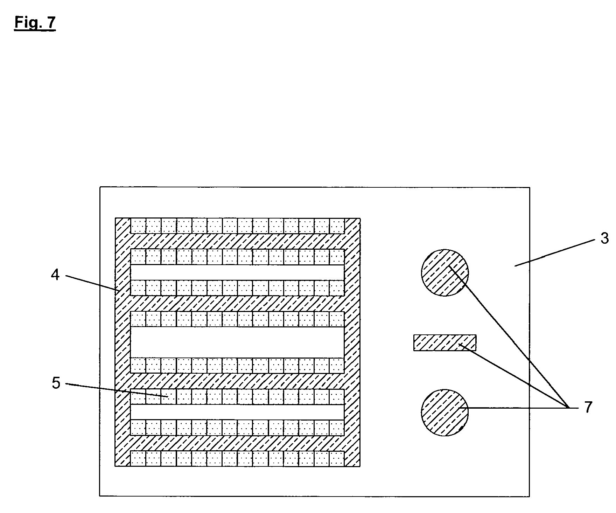

Fig. 7 zeigt ein zweites Beispiel eines Lesegerätes. Das Lesegerätlayout umfasst bevorzugt ein Trägermaterial bzw. Platine 3, eine Erregerelektrode 4, eine Leseelektrode 5 und eine Lesevorrichtung für ein Sicherheitsmerkmal 7. Eine Leseelektrode 5 kann beispielsweise auch zur Biterkennung verwendet werden.

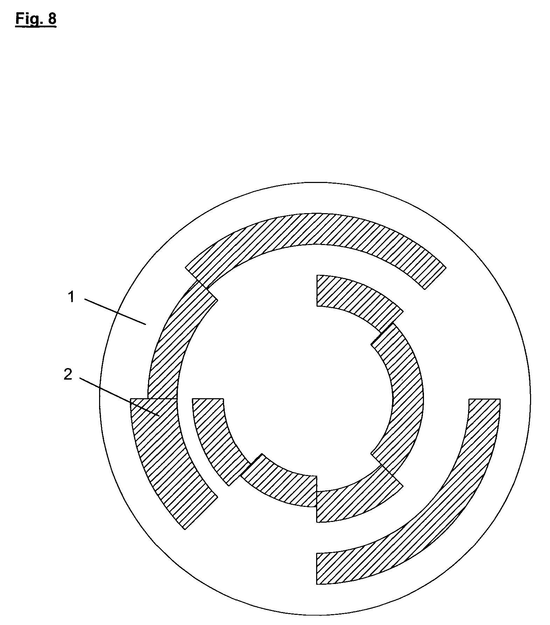

Fig. 8 zeigt ein fünftes Beispiel eines Informationsträgers. Der Informationsträger umfasst bevorzugt ein Substrat 1 und eine Informationsschicht 2.

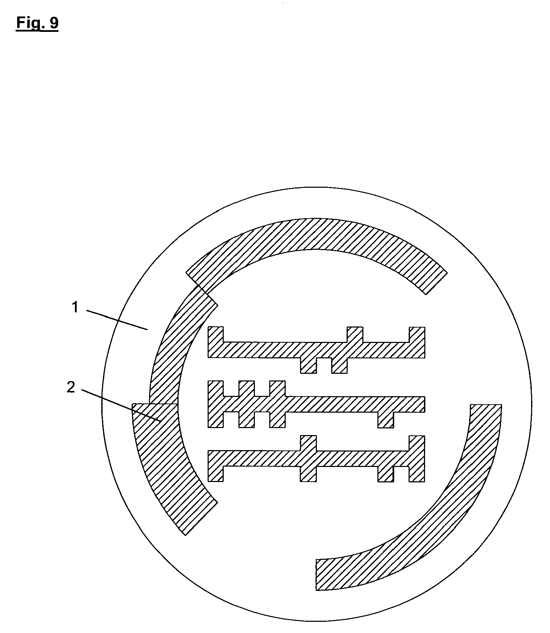

Fig. 9 stellt ein sechstes Beispiel eines Informationsträgers dar. Hierbei weist der Informationsträger bevorzugt ein Substrat 1 und eine Införmationsschicht 2 auf.

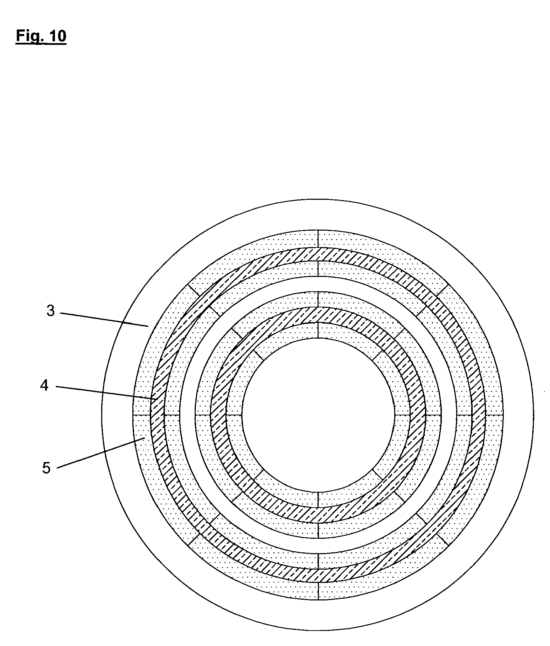

Fig. 10 zeigt ein drittes Beispiel eines Lesegerätes. Hierbei ist beispielhaft ein Lesegerätlayout dargestellt, welches beispielsweise aus einem Trägermaterial bzw. Platine 3, einer Erregerelektrode 4 und einer Leseelektrode 5 bestehen kann.

## Patentansprüche

1. Informationsträger für eine Leseeinrichtung, welcher ein elektrisch nicht leitendes Substrat (1) mit einer elektrisch nicht leitenden, wenigstens bereichsweise aufgebrachten Kleberschicht umfasst, auf welcher eine mindestens einlagige elektrisch leitfähige Informationsschicht angeordnet ist, wenigstens eine zumindest den Bereich des Substrats (1) mit der strukturierten Informationsschicht (2) überdeckende weitere Schicht angeordnet ist, bevorzugt eine Papierschicht und/oder eine Folienschicht und/oder eine Farbschicht und/oder eine Lackschicht oder Kombinationen derer
**dadurch gekennzeichnet, dass**
die Informationsschicht (2) eine durch ein Kaltfolientransferverfahren aufgebrachte Schicht ist.

2. Informationsträger, nach Anspruch 1
**dadurch gekennzeichnet, dass**
der Informationsgehalt des Informationsträgers durch die Informationsschicht (2) bestimmt wird.

3. Informationsträger nach Anspruch 1 oder 2,
**dadurch gekennzeichnet, dass**
die Informationsschicht (2) Metalle, Graphit, Ruß und/oder dielektrische Werkstoffe umfasst und die weiteren Schichten, mindestens eine Kleberschicht und/oder mindestens eine Papierschicht und/oder mindestens eine Farbschicht und/oder eine Lackschicht und/oder eine Folie umfassen.

4. Informationsträger nach einem der vorhergehenden Ansprüche,
**dadurch gekennzeichnet, dass**
die strukturierte Informationsschicht (2) aus Eckpunkten und/oder Kurven definierten Füllflächen besteht, insbesondere aus Rechtecken und/oder Kreisen, wobei die Position, die Form und/oder die Fläche selbst als Bestandteile der strukturierten Informationsschicht (2) mittels einer Leseeinrichtung feststellbar sind und diese den Informationsinhalt einer bestimmten Anzahl von Datenträgern darstellen.

5. Informationsträger nach einem der vorhergehenden Ansprüche,
**dadurch gekennzeichnet, dass**
die aufgebrachten Informationsschichten (2) bereichsweise, mittels additiver und/oder subtraktiver Verfahren, bevorzugt durch Inkjetverfahren und besonders bevorzugt durch Laserverfahren in ihrer Strukturierung verändert sind.

6. Informationsträger nach einem der vorhergehenden Ansprüche
**dadurch gekennzeichnet, dass**
Merkmale und/oder Elemente auf oder angebracht werden, welche zusätzliche optische Informationen beinhalten, insbesondere aufgedruckte Werte, Symbole, Zeichen, Sicherheits- (6) und/oder Echtheitsmerkmale, insbesondere auf Spielkarten und/oder Sammelkarten.

7. Gruppe von Informationsträgern umfassend mehrere Informationsträger nach einem der vorhergehenden Ansprüche,
**dadurch gekennzeichnet, dass**
mindestens eine Farbschicht, Kleberschicht, Papierschicht und/oder Folie jeweils wenigstens als Hintergrund, Überdeckung, Zahl, Buchstabe, Zeichen, graphische Darstellung und/oder bildliche Darstellung oder einer Kombination hiervon aufgebracht ist, wobei
- mehrere Informationsträger eine gleiche Struktur der Informationsschicht (2) und mindestens eine gleich gestaltete Farbschicht besitzen, so dass eine in sich geschlossene Gruppe von informationstechnisch und optisch gleichen Informationsträgern realisiert wird,
- mehrere Informationsträger eine gleiche Struktur der Informationsschicht (2) und mindestens eine unterschiedlich gestaltete Farbschicht besitzen, so dass eine Gruppe von informationstechnisch gleichen, aber optisch unterschiedlichen, Informationsträgern realisiert wird,
- mehrere Informationsträger eine ungleiche Struktur der Informationsschicht (2) und mindestens eine gleich gestaltete Farbschicht besitzen, so dass ein Gruppe informationstechnisch eindeutiger, aber optisch gleicher, Informationsträgern realisiert wird,
- mehrere Informationsträger eine ungleiche Struktur der Informationsschicht (2) und mindestens eine ungleich gestaltete Farbschicht besitzen, so dass vollständig, also optisch und informationstechnisch, eindeutige Informationsträgern realisiert werden.

8. Identifikationssystem,
**dadurch gekennzeichnet, dass**
es mindestens einen Informationsträger nach einem der vorhergehenden Ansprüche und mindestens ein Lesegerät umfasst.

9. Identifikationssystem nach Anspruch 8
**dadurch gekennzeichnet, dass**
das mindestens eine Lesegerät mit mindestens einem weiteren datenverarbeitenden Medium zusammengeschaltet ist.

10. Identifikationssystem nach Anspruch 8 oder 9,
**dadurch gekennzeichnet, dass**
das Lesegerät entweder einen Schacht, einen Schlitz und/oder eine Auflagefläche zur Aufnahme wenigstens eines Teils des Informationsträgers besitzt und der Informationsträger vorgegeben oder beliebig in, an oder auf dem Lesegerät positioniert ist.

11. Verwendung eines Informationsträgers nach einem der Ansprüche 1 bis 6, einer Gruppe von Informationsträgern nach Anspruch 7 und/oder einem Identifikationssystem nach Anspruch 8 bis 10,
**dadurch gekennzeichnet, dass**
der oder die Informationsträger über seine oder ihre strukturierte Informationsschicht (2) die Interpretation der auf dem Informationsträger enthaltenen Information durch ein Lesegerät bestimmt und dies bevorzugt dadurch erreicht, in dem die Informationsschicht (2) in einen interpretationsbeschreibenden Bereich und in einen informationstragenden Bereich unterteilt ist.

12. Verwendung eines Informationsträgers nach einem der Ansprüche 1 bis 6, einer Gruppe von Informationsträgern nach Anspruch 7 und/oder einem Identifikationssystem nach Anspruch 8 bis 10,
**dadurch gekennzeichnet, dass**
die strukturierte Informationsschicht (2) durch eine Leseeinrichtung, deren Elektrodenanordnungen (4, 5) so ausgebildet und angeordnet sind, dass die Anzahl und/oder Größe und/oder Form und/oder Lage der strukturierten Informationsschicht (2) des oder der Informationsträgers erkannt, erfasst und datentechnisch weiterverarbeitet wird.

13. Verwendung eines Informationsträgers nach einem der Ansprüche 1 bis 6, einer Gruppe von Informationsträgern nach Anspruch 7 und/oder einem Identifikationssystem nach Anspruch 8 bis 10,
**dadurch gekennzeichnet, dass**
der oder die Informationsträger in Verbindung mit einer Leseeinrichtung über seine oder ihre strukturierte Informationsschicht (2) einer Aktion eines Datenverarbeitungssystem zugeordnet wird oder werden oder diese auslöst oder auslösen, bevorzugt betrifft dies Aktionen auf nicht-vernetzten Datenverarbeitungssystemen und besonders bevorzugt auf vernetzten Datenverarbeitungssystemen.

14. Verwendung eines Informationsträgers nach einem der Ansprüche 1 bis 6, einer Gruppe von Informationsträgern nach Anspruch 7 und/oder einem Identifikationssystem nach Anspruch 8 bis 10,
**dadurch gekennzeichnet, dass**
dieser oder diese einem Datensatz in einem Datenverarbeitungsgerät zugeordnet ist oder sind und dieser konstant bleibt oder sich im Laufe seiner Verwendung verändert.

15. Verwendung eines Informationsträgers nach einem der Ansprüche 1 bis 6, einer Gruppe von Informationsträgern nach Anspruch 7 und/oder einem Identifikationssystem nach Anspruch 8 bis 10,
**dadurch gekennzeichnet, dass**
nur in Kombination mit mindestens einem weiteren Informationsträger der Informationsgehalt komplettiert und damit die Zuordnung zu einem weiteren Datensatz freigegeben wird.

## Claims

1. Information carrier for a reading device, which comprises an electrically nonconductive substrate (1) having an electrically nonconductive adhesive layer applied to at least some areas, on which there are arranged an at least single-layer electrically conductive information layer and at least one further layer covering at least the area of the substrate (1) having the structured information layer (2), preferably a paper layer and/or a film layer and/or a coloured layer and/or a paint layer or combinations thereof, **characterized in that**
the information layer (2) is a layer applied by a cold film transfer process.

2. Information carrier according to Claim 1, **characterized in that**
the information content of the information carrier is determined by the information layer (2).

3. Information carrier according to Claim 1 or 2, **characterized in that**
the information layer (2) comprises metals, graphite, carbon black and/or dielectric materials, and the further layers comprise at least one adhesive layer and/or at least one paper layer and/or at least one coloured layer and/or a paint layer and/or a film.

4. Information carrier according to one of the preceding claims,
**characterized in that**
the structured information layer (2) is composed of filling areas defined by reference points and/or curves, in particular of rectangles and/or circles, the position, the shape and/or the area itself, as constituent parts of the structured information layer (2), being determinable by means of a reading device, and these representing the information content of a specific number of data carriers.

5. Information carrier according to one of the preceding claims,
**characterized in that**
the structuring of the applied information layers (2) is changed in some areas by means of additive and/or subtractive methods, preferably by inkjet methods and particularly preferably by laser methods.

6. Information carrier according to one of the preceding claims,
**characterized in that**
features and/or elements which contain additional optical information, in particular printed values, symbols, characters, security (6) and/or authenticity features, are applied, in particular on or to playing cards and/or collector cards.

7. Group of information carriers comprising a plurality of information carriers according to one of the preceding claims,
**characterized in that**
at least one coloured layer, adhesive layer, paper layer and/or film is respectively applied at least as background, covering, number, letter, character, graphic representation and/or pictorial illustration or a combination hereof,
- a plurality of information carriers having an identical structure of the information layer (2) and at least one identically configured coloured layer, so that an intrinsically closed group of information technologically and optically identical information carriers is implemented,
- a plurality of information carriers having an identical structure of the information layer (2) and at least one differently configured coloured layer, so that a group of information technologically identical but optically different information carriers is implemented,
- a plurality of information carriers having a non-identical structure of the information layer (2) and at least one identically configured coloured layer, so that a group of information technologically unique but optically identical information carriers is implemented,
- a plurality of information carriers having a non-identical structure of the information layer (2) and at least one non-identically configured coloured layer, so that completely, that is to say optically and information technologically, unique information carriers are implemented.

8. Identification system,
**characterized in that**
it comprises at least one information carrier according to one of the preceding claims and at least one reading device.

9. Identification system according to Claim 8, **characterized in that**
the at least one reading device is interconnected with at least one further data-processing medium.

10. Identification system according to Claim 8 or 9, **characterized in that**
the reading device has at least one chute, a slot and/or a supporting surface for receiving at least part of the information carrier, and the information carrier is positioned in, on or on top of the reading device as predefined or desired.

11. Use of an information carrier according to one of Claims 1 to 6, a group of information carriers according to Claim 7 and/or an identification system according to Claims 8 to 10,
**characterized in that**
the information carrier or carriers determines the interpretation of the information contained on the information carrier by means of a reading device by its or their structured information layer (2), and this is preferably achieved **in that** the information layer (2) is subdivided into an interpretation-describing area and an informationcarrying area.

12. Use of an information carrier according to one of Claims 1 to 6, a group of information carriers according to Claim 7 and/or an identification system according to Claims 8 to 10,
**characterized in that**
the structured information layer (2) is detected by a reading device, the electrode arrangements (4, 5) of which are formed and arranged such that the number and/or size and/or shape and/or position of the structured information layer (2) of the information carrier or carriers is registered and the data is processed further.

13. Use of an information carrier according to one of Claims 1 to 6, a group of information carriers according to Claim 7 and/or an identification system according to Claims 8 to 10,
**characterized in that**
the information carrier or carriers, in conjunction with a reading device, is/are assigned to or triggers or trigger an action of a dataprocessing system via its or their structured information layer (2); this preferably relates to the actions of non-networked data-processing systems and particularly preferably to networked data-processing systems.

14. Use of an information carrier according to one of Claims 1 to 6, a group of information carriers according to Claim 7 and/or an identification system according to Claims 8 to 10,
**characterized in that**
this or these is/are assigned to a dataset in a data-processing device and the said dataset remains constant or changes in the course of its use.

15. Use of an information carrier according to one of Claims 1 to 6, a group of information carriers according to Claim 7 and/or an identification system according to Claims 8 to 10,
**characterized in that**
only in combination with at least one further information carrier is the information content completed and the assignment to a further dataset therefore released.

## Revendications

1. Support d'informations destiné à un dispositif de lecture comprenant un substrat non électriquement conducteur (1) comportant une couche d'adhésif non électriquement conductrice déposée dans au moins certaines régions, sur laquelle est disposée au moins une couche d'informations monocouche électriquement conductrice, au moins une autre couche recouvrant au moins la région du substrat (1) comportant la couche d'informations structurée (2), de préférence une couche de papier et/ou une couche de film et/ou une couche colorée et/ou une couche de vernis ou des combinaisons de celles-ci,
**caractérisé en ce que** la couche d'informations (2) est une couche déposée par un procédé de transfert de film à froid.

2. Support d'informations selon la revendication 1,
**caractérisé en ce que** le contenu d'informations du support d'informations est déterminé par la couche d'informations (2).

3. Support d'informations selon la revendication 1 ou 2,
**caractérisé en ce que** la couche d'informations (2) comprend des métaux, du graphite, du noir de carbone et/ou des matériaux diélectriques et **en ce que** les autres couches comprennent au moins une couche d'adhésif et/ou au moins une couche de papier et/ou au moins une couche colorée et/ou une couche de vernis et/ou un film.

4. Support d'informations selon l'une quelconque des revendications précédentes,
**caractérisé en ce que** la couche d'informations structurée (2) est constituée de surfaces de remplissage définies par des sommets et/ou des courbes, notamment des rectangles ou des cercles, dans lequel la position, la forme et/ou la superficie peuvent ellesmêmes être établies en tant que parties constitutives de la couche d'informations structurée (2) au moyen d'un dispositif de lecture et **en ce qu'**elles représentent le contenu d'informations d'un nombre déterminé de supports de données.

5. Support d'informations selon l'une quelconque des revendications précédentes,
**caractérisé en ce que** les couches d'informations déposées (2) sont modifiées dans leur structuration dans certaines régions au moyen d'un procédé additif et/ou soustractif, de préférence par un procédé à jet d'encre et plus préférablement par un procédé au laser.

6. Support d'informations selon l'une quelconque des revendications précédentes,
**caractérisé en ce que** des caractéristiques et/ou des éléments sont inscrits, ceux-ci contenant des informations optiques supplémentaires, notamment des valeurs, des symboles, des signes, des caractéristiques de sécurité (6) et/ou de temps réel, déposées ou fixées, notamment sur des cartes à jouer et/ou des cartes de collection.

7. Groupe de supports d'informations comprenant une pluralité de supports d'informations selon l'une quelconque des revendications précédentes,
**caractérisé en ce qu'**au moins une couche colorée, une couche d'adhésif, une couche de papier et/ou un film est respectivement déposé au moins sous la forme d'un arrière-plan, d'un recouvrement, d'un nombre, d'une lettre, d'un signe, d'une représentation graphique et/ou d'une représentation sous forme d'image ou d'une combinaison de ceux-ci, dans lequel
- une pluralité de supports d'informations possèdent une structure identique de la couche d'informations (2) et au moins une couche colorée conçue de manière identique afin de réaliser un groupe bien défini de supports d'informations identiques d'un point de vue informatique et optique ;
- une pluralité de supports d'informations possèdent une structure identique de la couche d'informations (2) et au moins une couche colorée conçue de manière différente afin de réaliser un groupe de supports d'informations identiques d'un point de vue informatique, mais différents d'un point de vue optique ;
- une pluralité de supports d'informations possèdent une structure différente de la couche d'informations (2) et au moins une couche colorée conçue de manière identique, afin de réaliser un groupe de supports d'informations uniques d'un point de vue informatique mais identiques d'un point de vue optique,
- une pluralité de supports d'informations possèdent une structure différente de la couche d'informations (2) et au moins une couche colorée réalisée de manière différente afin de réaliser des supports d'informations intégralement uniques et par conséquent uniques d'un point de vue optique et informatique.

8. Système d'identification,
**caractérisé en ce qu'**il comprend au moins un support d'informations selon l'une quelconque des revendications précédentes et au moins un appareil de lecture.

9. Système d'identification selon la revendication 8,
**caractérisé en ce qu'**au moins un appareil de lecture est interconnecté à au moins un autre support de traitement de données.

10. Système d'identification selon la revendication 8 ou 9,
**caractérisé en ce que** l'appareil de lecture possède une encoche, une fente et/ou une surface d'appui destinée à la réception d'au moins une partie du support d'informations et **en ce que** le support d'informations est positionné de manière prédéterminée ou quelconque dans, au niveau de, ou sur l'appareil de lecture.

11. Utilisation d'un support d'informations selon l'une quelconque des revendications 1 à 6, d'un groupe de supports d'informations selon la revendication 7 et/ou d'un système d'identification selon les revendications 8 à 10,
**caractérisée en ce que** le ou les support(s) d'informations détermine ou déterminent par l'intermédiaire de sa ou de ses couche(s) d'informations structurée(s) (2) l'interprétation des informations contenues sur le support d'informations au moyen d'un appareil de lecture et y parvient préférablement en subdivisant la couche d'informations (2) en une région décrivant l'interprétation et en une région porteuse d'informations.

12. Utilisation d'un support d'informations selon l'une quelconque des revendications 1 à 6, d'un groupe de supports d'informations selon la revendication 7 et/ou d'un système d'identification selon les revendications 8 à 10,
**caractérisée en ce que** la couche d'informations structurée (2) est détectée et soumise à un posttraitement de données au moyen d'un dispositif de lecture dont les agencements d'électrodes (4, 5) sont réalisés et configurés de manière à reconnaitre le nombre et/ou la taille et/ou la forme et/ou la position de la couche d'informations structurée (2) du ou des support(s) d'informations.

13. Utilisation d'un support d'informations selon l'une quelconque des revendications 1 à 6, d'un groupe de supports d'informations selon la revendication 7 et/ou d'un système d'identification selon les revendications 8 à 10,
**caractérisée en ce que** le ou les support(s) d'informations est ou sont affecté(s) à une action d'un système de traitement de données relié à un dispositif de lecture par l'intermédiaire de sa ou de leurs couche(s) d'informations structurée(s) (2) ou **en ce que** qu'il(s) la déclenche ou déclenchent, cela concernant de préférence des actions sur des systèmes de traitement de données non connectés en réseau et plus préférablement sur des systèmes de traitement de données connectés en réseau.

14. Utilisation d'un support d'informations selon l'une quelconque des revendications 1 à 6, d'un groupe de supports d'informations selon la revendication 7 et/ou d'un système d'identification selon les revendications 8 à 10,
**caractérisée en ce que** celui-ci ou ceux-ci est ou sont affecté(s) à un ensemble de données dans un appareil de traitement de données et **en ce que** celui-ci reste constant ou varie au cours de son utilisation.

15. Utilisation d'un support d'informations selon l'une quelconque des revendications 1 à 6, d'un groupe de supports d'informations selon la revendication 7 et/ou d'un système d'identification selon les revendications 8 à 10,
**caractérisée en ce que** le contenu d'informations n'est complété qu'en association avec au moins un autre support d'informations pour ainsi supprimer ladite affectation à un autre ensemble de données.
